# DEMANDE DE BREVET EUROPEEN

(11) **EP 0 890 677 A1**
(43) Date de publication de la demande: **13.01.1999**
(21) Numéro de dépôt: 98870157.9
(22) Date de dépôt: 10.07.1998
(51) Int. Cl.: D21H 19/18, C09D 191/06, C09D 191/08

(54) **Pellicule cellulosique destinée à l'emballage de produits à taux d'humidité élevé**

(30) Priorité: 10.07.1997 BE 9700600
(71) Demandeur: UCB, S.A., 1070 Bruxelles (BE)
(72) Inventeur: Janssen, Mat, 8301 Knokke-Heist (BE); Portal, Maribi, 92300 Levallois-Perret (FR)

(57) **Abrégé**

L'invention se rapporte à une nouvelle composition comprenant de 5 à 50% en poids de paraffine et de 50 à 95% en poids d'une cire dont la perméabilité intrinsèque à la vapeur d'eau est supérieure à celle de la paraffine et éventuellement des particules hydrosorbantes. Cette composition est destinée à être enduite sur une pellicule cellulosique. Cette composition confère à celle-ci de remarquables propriétés de perméabilité aux gaz ainsi qu'à l'eau sous forme de liquide ou de vapeur.
L'invention concerne également un nouveau matériau destiné à l'emballage de produits alimentaires, en particulier, de produits alimentaires à taux d'humidité élevé ainsi qu'un procédé de fabrication de ce nouveau matériau. D'autres aspects de l'invention ont trait à diverses applications de ce nouveau matériau dans le domaine de l'industrie agro-alimentaire.

## Description

La présente invention se rapporte à une nouvelle composition destinée à être enduite sur une pellicule cellulosique et conférant à celle-ci de remarquables propriétés de perméabilité aux gaz ainsi qu'à l'eau sous forme de liquide ou de vapeur. L'invention concerne également un nouveau matériau destiné à l'emballage de produits à taux d'humidité élevé ainsi qu'un procédé de fabrication de ce nouveau matériau. D'autres aspects de l'invention ont trait à des applications particulières de ce nouveau matériau dans le domaine de l'industrie agro-alimentaire.

On sait que les fromages à pâte molle à croûte fleurie, tels que le brie, le camembert, le chaource, le neufchâtel, le coulommiers etc., ainsi que les fromages à pâte molle à croûte lavée, tels que le reblochon, le munster, le pont-l'évêque, le maroilles, la vacherin, l'époisses, le livarot etc., nécessitent, après leur emballage, un complément d'affinage qui se poursuit jusqu'à leur consommation. Pendant cet affinage, le fromage est soumis à des échanges gazeux avec le milieu ambiant, absorbant de l'oxygène et rejetant, entre autres, du gaz carbonique et de la vapeur d'eau.

Pour cette raison, il a toujours été considéré comme étant essentiel que les feuilles d'emballage destinées à ce type de produits présentent une perméabilité suffisante à ces différents gaz pour leur permettre une bonne évolution dans le temps.

Toutefois, ces produits devant conserver un taux d'humidité assez important, il convient en outre que l'emballage laisse passer l'eau de manière contrôlée afin d'éviter leur dessèchement.

L'état de la technique connaît déjà un nombre élevé de solutions pour l'emballage de ce type de produit.

Ainsi, on utilise conventionnellement une structure composite comprenant une pellicule cellulosique revêtue sur ses deux faces d'un vernis nitrocellulosique ou de type acétochlorure de vinyle contrecollée par raies de colle sur un papier dont une face est revêtue de paraffine, le papier paraffiné étant placé à l'intérieur de l'emballage, sa face paraffinée étant au contact du fromage. Dans ce type d'emballage, la feuille de papier absorbe l'eau sous forme de vapeur, mais aussi sous forme liquide et la désorbe ensuite au travers de la pellicule cellulosique, laquelle doit présenter une perméabilité suffisante à la vapeur d'eau pour éviter que l'eau ne puisse se condenser dans l'espace entre la feuille de papier et la pellicule cellulosique. Une telle structure composite possède généralement une perméabilité à la vapeur d'eau (PVE) mesurée à 38°C et sous une humidité relative de 90% (ASTM E96, conditions tropicales) de l'ordre de 25 à 50 g/m².jour et une perméabilité à l'oxygène mesurée à 23°C (ASTM 3985-81) dans des conditions d'humidité relative de 75% comprise entre 250 et 500 ml/m².jour.atm. En pratique, cet emballage, bien que très largement répandu et représentant la meilleure solution connue à ce jour, devrait encore être amélioré, notamment en ce qui concerne la perte de poids et le dessèchement du produit emballé et en ce qui concerne la qualité gustative du fromage qui subit une protéolyse dont l'importance croît avec le temps.

En variante, on a également proposé des structures composites similaires dans lesquelles la pellicule de cellulose à haute PVE est remplacée par une feuille de papier enduite d'une cire à brillance élevée ou par un film plastique dont la perméabilité est assurée par des microperforations. Cette solution n'est toutefois pas satisfaisante car les microperforations représentent une source potentielle de contamination du produit emballé; en outre, dans ce cas, les échanges gazeux ne se font pas de manière homogène et on observe une condensation importante dans l'espace entre les deux films. Récemment, on a proposé dans la demande de brevet européen 491.637 de pallier cet inconvénient en garnissant le film extérieur d'un enduit renfermant des particules de polymère hydrosorbant afin de créer entre les deux films une zone humide intermédiaire. Ce type de structure présente les mêmes défauts que le composite pellicule de cellulose / papier paraffiné discuté ci-avant.

En général, le papier qui porte l'enduction de paraffine subit un traitement destiné à augmenter sa résistance à l'état humide (REH). On a toutefois proposé dans la demande de brevet européen 298.003 d'utiliser un papier n'ayant pas subi ce genre de traitement qui a le désavantage de rendre le papier légèrement hydrophobe et de limiter sa capacité d'absorption de l'eau. Il est clair que la REH de cet emballage laisse à désirer et est inacceptable en pratique.

Enfin, dans la demande de brevet européen 211.786, on a également décrit des structures composites de ce type dans lesquelles la paraffine enduite sur la couche de papier placée à l'intérieur de la feuille d'emballage possède à sa surface en contact avec le fromage, des particules organiques telles que la caséine ou l'amidon. Ces particules absorbent l'eau issue du fromage et la répartissent de façon homogène dans l'emballage en évitant ainsi une condensation d'eau préjudiciable à une bonne maturation du fromage.

A côté de ces solutions utilisant un emballage composite, on a également proposé d'employer en tant qu'emballage pour ce type de produits à taux d'humidité élevé, des structures à un seul film. Il est évident en effet qu'une telle structure est plus simple à produire et à mettre en oeuvre.

La solution la plus simple et la meilleure connue à ce jour a consisté à emballer le fromage dans un papier paraffiné sur ses deux faces. Cet emballage trop perméable aux gaz ne permet toutefois pas de maîtriser suffisamment bien l'évolution de l'affinage, qui évoluera différemment en fonction de la composition du fromage et des conditions de conservation (température/humidité relative).

On a également proposé d'emballer ces produits dans des films plastiques de polyoléfine, de polychlorure de vinyle, etc. dont la perméabilité est assurée par microperforation. On a déjà indiqué ci-avant les inconvénients de telles microperforations.

La demande de brevet européen 8.961 divulgue une pellicule cellulosique enduite sur ses deux faces d'un vernis nitrocellulosique et possédant en outre, sur sa face interne, une couche supplémentaire de vernis nitrocellulosique renfermant des particules d'amidon ou de caséine. Toutefois, un tel emballage, s'il offre des avantages certains par rapport aux emballages préalablement existants, présente divers inconvénients tel que par exemple le manque de stabilité dimensionnelle, le manque d'adhérence de la couche supplémentaire, une surface trop lisse, ...

On a décrit dans la demande de brevet français 2.500.019 un emballage similaire dont la pellicule de cellulose est remplacée par une feuille de papier.

Ces solutions mettant en oeuvre un emballage constitué d'un seul film ne sont toutefois pas entièrement satisfaisantes.

A ce jour, il n'a en effet pas été possible de fournir un emballage constitué d'un seul film présentant un compromis acceptable en ce qui concerne le contrôle des échanges gazeux, la possibilité et la facilité d'impression, la rigidité, la facilité de mise en oeuvre, la conservabilité des produits emballés et la stabilité de la feuille d'emballage (adhérence entre les différentes couches) et qui, de plus soit économiquement acceptable.

De tout ce qui précède, il est évident qu'il existe encore un besoin d'emballages constitués d'un film unique et qui satisfont aux exigences indiquées ci-avant et qui de plus peuvent être préparés par un procédé simple impliquant des matières premières peu coûteuses et directement disponibles.

La demanderesse s'est donc fixé comme objectif de fournir un tel emballage constitué d'un seul film ne présentant pas les défauts mentionnés ci-avant et d'une qualité supérieure aux emballages existants.

La demanderesse a trouvé maintenant une catégorie nouvelle et très utile de compositions d'enduit qui, lorsqu'ils sont déposés sur un substrat approprié, fournissent un emballage constitué d'un seul film et qui satisfait remarquablement aux exigences mentionnées ci-avant.

C'est pourquoi la présente invention a pour premier objet une composition d'enduit comprenant de 5 à 50% en poids de paraffine et de 50 à 95% en poids d'une cire dont la perméabilité intrinsèque à la vapeur d'eau est supérieure à celle de la paraffine. Selon une forme préférée de réalisation de l'invention, la composition d'enduit comprend de 20 à 50% en poids de paraffine et de 50 à 80% en poids d'une cire dont la PVE intrinsèque à la vapeur d'eau est supérieure à celle de la paraffine. Pour déterminer cette différence de PVE intrinsèque, on procède de la manière suivante: sur un substrat qui sert de référence, en l'occurrence une feuille de cellulose non revêtue (30,0 g/m²) perméable (par exemple: RAYOPHANE® 300 P de la société UCB FILMS), on dépose une couche de vernis nitrocellulosique comprenant 2% de paraffine à raison de 3 g/m² et on mesure la PVE de la feuille ainsi revêtue à 38°C et sous une humidité relative de 90% (conditions tropicales, ASTM E96).
Sur un substrat semblable, on dépose une couche de vernis nitrocellulosique comprenant 2% de la cire à tester également à raison de 3 g/m² et on mesure la PVE de la feuille dans les mêmes conditions. On détermine ensuite le rapport entre la PVE intrinsèque de la cire et la PVE intrinsèque de la paraffine. De préférence la cire possédera une PVE intrinsèque supérieure d'au moins un facteur 10 à celle de la paraffine. Selon un mode de réalisation encore plus préféré, la cire possédera une PVE intrinsèque d'environ 30 fois supérieure à celle de la paraffine.

Une telle composition enduite sur un substrat approprié a pour effet de limiter la perméabilité de l'emballage ainsi obtenu non seulement à l'eau sous forme de vapeur ou de liquide, mais également, et de manière importante, aux gaz (oxygène, dioxyde de carbone, ...). Il est particulièrement surprenant qu'en affectant de la sorte la perméabilité aux gaz on puisse néanmoins obtenir des produits présentant des qualités supérieures aux produits emballés dans une feuille nettement plus perméable aux gaz et à l'eau. Jusqu'à présent, il était en effet généralement admis qu'un certain degré de perméabilité à l'oxygène était indispensable pour que le produit puisse continuer à "vivre" après avoir été emballé. La demanderesse vient de faire la découverte étonnante qu'en réalité, il n'en est rien et qu'en limitant la perméabilité à l'oxygène, on pouvait diminuer fortement le degré de protéolyse du fromage emballé et, par voie de conséquences, obtenir un fromage aux qualités gustatives améliorées.

Dans la présente description, le terme de paraffine correspond à son acception généralement usitée dans l'industrie agro-alimentaire, c'est-à-dire à des cires consistant d'une manière prédominante en des mélanges d'hydrocarbures à chaînes droites pouvant toutefois contenir jusqu'à 40% en poids de cycloalkanes ou d'hydrocarbures branchés et ayant de 18 à 45 atomes de carbone et à des cires dites intermédiaires consistant d'une manière prédominante en des mélanges d'hydrocarbures à chaînes droites contenant de 30 à 60% en poids de cycloalkanes ou d'hydrocarbures branchés et ayant de 22 à 60 atomes de carbone. A titre d'exemple, on citera la paraffine TOTAL de type INTER H. En règle générale, les paraffines que l'on peut utiliser selon l'invention possèdent une PVE intrinsèque comprises entre 20 et 30 g/m².jour.

En tant que cire dont la perméabilité intrinsèque à la vapeur d'eau est supérieure à celle de la paraffine, on peut utiliser toute cire connue de l'homme du métier pour cette propriété. En particulier, la demanderesse a observé que les esters de polyols ayant de 3 à 5 fonctions hydroxyle avec des acides gras saturés ou insaturés et portant jusqu'à 3 fonctions hydroxyle conviennent particulièrement bien. Des polyols pouvant avantageusement être utilisés sont le glycérol, le triméthyloléthane, le triméthylolpropane et le pentaérythritol, seuls ou en mélange. En tant qu'acides gras, on utilisera par exemple les acides palmitique, margarique, stéarique, arachidique, montanique, ainsi que leurs dérivés mono- ou di-hydroxylés et leurs dérivés mono-, di- ou tri-insaturés, tels que les acides ricinoléique, dihydroxystéarique, 12-hydroxystéarique, linoléique et linolénique, seuls ou en mélange. De très bons résultats ont été obtenus avec l'ester triglycérique de l'acide 12-hydroxystéarique et avec le tétrastéarate de pentaérythritol. De manière très avantageuse, on utilisera des mélanges d'origine naturelle de ces esters, comme par exemple l'huile de ricin ou l'huile de ricin hydrogénée (complètement ou partiellement), de préférence, l'huile de ricin hydrogénée. En règle général, les cires que l'on peut utiliser selon l'invention possèdent une PVE intrinsèque comprise entre 200 et 900 g/m².jour. A titre d'exemple, on citera les produits commercialisés sous les noms de CASTORWAX MP-70 ou MP-80, CENWAX G, CEROXIN SPECIAL, HG 271 B, etc.

Avantageusement, la composition d'enduit constituée du mélange de cires comprend également des particules hydrosorbantes. Dans ce cas, la demanderesse a pu constater que la capacité qu'a le substrat d'absorber l'eau provenant du produit emballé était nettement améliorée, sans pour autant que sa perméabilité aux gaz ne soit augmentée dans la même mesure. Dès lors, le produit emballé, tout en conservant un taux de protéolyse extrêmement bas, possède une meilleure conservabilité de par le fait que les gouttelettes d'eau se formant par condensation à la surface du fromage sont absorbées rapidement par l'emballage et sont donc mieux réparties à travers l'ensemble de l'emballage.

En tant que matières hydrosorbantes, on peut utiliser par exemple de la cellulose ou un de ses dérivés comme l'éthylhydroxyéthylcellulose, l'éthylcellulose, la carboxyméthylcellulose, le propionate de cellulose, etc. ou encore l'alcool polyvinylique.

Des matières hydrosorbantes qui conviennent particulièrement bien sont des filaments de cellulose. De préférence, on les choisira relativement courts (d'une longueur moyenne inférieure à 50 µm, de préférence d'environ 20 µm). Le produit commercial ayant fourni les meilleurs résultats est ARBOCEL BE 600-10 de la société RETTENMAIER & SOHNE GmbH.

La quantité de ces particules hydrosorbantes incorporée dans la composition dépendra du pouvoir d'absorption d'eau que l'on souhaite conférer à la feuille d'emballage et donc, en définitive, du produit emballé, sachant que plus la composition comprend de ces particules, plus sa capacité d'absorption d'eau sera élevée. Toutefois, on évitera de dépasser la limite au-delà de laquelle ces particules ne sont plus compatibles avec les cires constituant la composition et au-delà de laquelle il n'est donc plus possible de former une suspension homogène. En règle générale, on ajoutera ces particules hydrosorbantes en une quantité comprise entre 15 et 30% en poids du mélange de cires.

Il est important d'avoir au moins 5% en poids de paraffine par rapport à la cire dont la PVE intrinsèque est inférieure à celle de la paraffine, faute de quoi les particules hydrosorbantes peuvent difficilement être incorporées de manière stable dans la composition.

En outre, on ne devrait pas dépasser 50% en poids de paraffine sinon la PVE de la feuille enduite sera trop faible.

On notera que la composition peut encore contenir les additifs usuels et bien connus de l'homme du métier que l'on rencontre généralement dans ce type de composition, bien que ceux-ci ne soient en aucun cas nécessaires. Par exemple, on peut ajouter des promoteurs d'adhésion préférentielle de l'enduit à la pellicule cellulosique plutôt qu'au fromage, des additifs améliorant la flexibilité de l'enduit ou encore des agents stabilisants.

Les avantages des nouvelles compositions selon la présente invention sont particulièrement observables lorsque ces compositions sont appliquées sur un substrat approprié dès lors qu'elles confèrent à celui-ci de remarquables propriétés de perméabilité aux gaz ainsi qu'à l'eau sous forme de liquide ou de vapeur. Par voie de conséquences, la présente invention a également pour objet un emballage comprenant un substrat approprié revêtu de la composition selon l'invention.

En tant que substrat, on préfère tout particulièrement un substrat possédant intrinsèquement (avant enduction de la composition selon l'invention) les caractéristiques suivantes: une PVE mesurée à 38°C et sous une humidité relative de 90% (ASTM E96, conditions tropicales) comprise entre 250 et 450 g/m².jour, de préférence, d'environ 350 g/m².jour, une capacité d'absorption d'eau comprise entre 4 et 11 g/m², de préférence d'environ 7g/m² (test Cobb modifié: 60 minutes) et une perméabilité à l'oxygène mesurée à 23°C dans des conditions d'humidité relative de 75% (ASTM 3985-81) inférieure à 100 ml/m².jour.atm.

En tant que substrat, on préfère utiliser une pellicule cellulosique appropriée, par exemple une pellicule cellulosique d'un grammage d'environ 43 g/m² avec une enduction d'un polymère à base d'acétochlorure de vinyle sur ses deux faces. La pellicule de cellulose RAYOPHANE® 430WS ou 430WSZB de la société UCB FILMS par exemple satisfait pleinement aux conditions requises.

Avantageusement, et pour autant que les législations concernant l'emballage de denrées alimentaires le permettent, on utilisera un substrat transparent qui acceptera une impression polychrome sur sa face située à l'intérieure de l'emballage. Dans ce cas, l'impression est observée à travers le substrat lui-même, ce qui confère à l'ensemble un effet de brillance remarquable. Il est toutefois possible également d'utiliser un substrat opaque ou translucide obtenu au moyen de pigments ou de charges incorporés dans sa masse. Dans ces deux derniers cas, il est cependant nécessaire que l'impression soit effectuée sur la face extérieure de l'emballage pour qu'elle soit visible, dès lors, l'effet de brillance que l'on obtient avec un substrat transparent sera moins prononcé.

Selon un autre de ses aspects, la présente invention concerne un procédé de réalisation d'un emballage pour produits à taux d'humidité élevé. Selon que l'on met en oeuvre un substrat transparent, opaque ou translucide, on procédera différemment.

Ainsi, dans le cas d'un substrat transparent, le procédé consistera essentiellement à dérouler le film substrat, à imprimer un motif sur la face de ce film destinée à se trouver à l'intérieur de l'emballage, et à enduire, en surcouche sur cette même face, une composition d'enduit selon l'invention. En option, on peut également enduire sur le motif d'impression une couche de fond opaque blanche ou de couleur afin de mieux le faire ressortir.

D'autre part, obligatoirement dans le cas d'un substrat opaque ou translucide, mais également avec un substrat transparent si on le souhaite, le procédé consistera essentiellement à dérouler le film substrat, à imprimer un motif sur la face de ce film destinée à se trouver à l'extérieur de l'emballage, et à déposer sur la face destinée à se trouver à l'intérieur de l'emballage, une composition d'enduit selon l'invention. En option, on peut également enduire sur le motif d'impression une couche de vernis destinée à en améliorer la brillance.

Typiquement, on déposera une couche d'enduit comprise entre 4 et 8 g/m².

La feuille d'emballage selon la présente invention trouvera sa principale application dans l'emballage de fromages à pâte molle à croûte fleurie ou à pâte molle à croûte lavée. Il a en effet été observé que des fromages de ce type emballés avec la feuille d'emballage conforme à l'invention perdent nettement moins de poids pendant leur période d'affinage et, en outre, présentent une saveur nettement supérieure que les mêmes fromages emballés dans une feuille d'emballage conventionnelle. Dès lors, un dernier aspect de la présente invention se rapporte à un procédé d'affinage de formages à pâte molle à croûte fleurie ou lavée qui consiste à laisser reposer le fromage dans une feuille d'emballage conforme à l'invention. Généralement, cet affinage a lieu en chambre froide (température comprise entre 4 et 10°C, de préférence de 6°C, humidité relative comprise entre 50 et 75%, de préférence de 60%) pendant une période de 4 a 10 semaines. Il est toutefois entendu que la fin de cet affinage peut simplement être réalisé chez le consommateur final dans un réfrigérateur.

Il est clair également que l'utilisation de la feuille d'emballage selon la présente invention n'est pas limitée à l'emballage de fromages à pâte molle ou même aux seuls produits alimentaires. Tout produit à taux d'humidité élevé sera avantageusement emballé au moyen d'une feuille d'emballage conforme à l'invention. En particulier, on citera la levure, la pâte à pain, ...

### EXEMPLES

A. Les deux compositions d'enduit suivantes, conformes à l'invention, ont été réalisées:

| | | |
|---|---|---|
| A. 1 | huile de ricin hydrogénée (HG 271 B de la société MOSSELMAN) | 75 g |
| | paraffine (INTER H) | 25 g |
| | Filaments de cellulose (ARBOCEL BE 600-10) | 25 g |
| | | |
| A.2 | huile de ricin hydrogénée (HG 271 B) | 55 g |
| | paraffine (INTER H) | 45 g |
| | Filaments de cellulose (ARBOCEL BE 600-10) | 25 g |
| | | |
| A.3 | huile de ricin hydrogénée (HG 271 B) | 90 g |
| | paraffine (INTER H) | 10 g |
| | Filaments de cellulose (ARBOCEL BE 600-10) | 25 g |

A titre de comparaison, la composition d'enduit suivante, non conformes à l'invention, a également été réalisée:

| | | |
|---|---|---|
| A.4 | huile de ricin hydrogénée (HG 271 B) | 100 g |
| | Filaments de cellulose (ARBOCEL BE 600-10) | 25 g |

B. Ces compositions d'enduit ont ensuite été déposées sur quatre feuilles de cellulose (RAYOPHANE® WS 430 de la société UCB FILMS) d'égale dimension à raison de 6 g/m². On a ainsi formé les échantillons B.1 à B.4.

A titre de comparaison, on a également testé un emballage conventionnel (composite pellicule cellulosique/papier paraffiné) (B.5).

Les propriétés des films B.1 à B.5 sont données dans la Table I ci-après. Dans cette table, on donne:
dans la première colonne, la référence de l'échantillon, dans la deuxième colonne, la capacité d'absorption d'eau (test Cobb modifié: 60 minutes), dans la troisième colonne, la perméabilité à la vapeur d'eau (PVE) en conditions tropicales, exprimée en g/m².jour, dans la quatrième colonne, la perméabilité à l'oxygène à 23°C et dans des conditions d'humidité relative de 50%, en ml/m².jour.atm.

**TABLE I**

| Echantillon | Absorption d'eau | PVE | Perm.oxygène |
|---|---|---|---|
| B.1 | < 0,5 | 73 | 8 |
| B.2 | < 0,5 | 35 | 8 |
| B.3 | 2,2 | 110 | 12 |
| B.4(1) | 2,3 | 141 | 12 |
| B.5(1) | 8 à 14 | 33 | 25 |

| | | | |
|---|---|---|---|
| (1) A titre de comparaison. | | | |

C. Quatre série de fromages identiques (C.1 à C.4) (camemberts fraîchement fabriqués) ont été réemballés au moyen des feuilles d'emballage B.1 à B.4. A titre de comparaison, on a également testé une série de fromages (C.5) qui ont été laissés dans leur emballage d'origine. Après 21 jours, on mesurait les pertes de poids respectives suivantes (en %): 3,0, 2,9, 3,5, 4,7 et 5,8. Au point de vue du goût, la saveur des fromages emballés, les fromages des séries C.1 et C.2 se distinguaient tout particulièrement des fromages des séries C.3 à C.5 de par leur saveur, leur constitution et leur fumet. Les fromages des séries C.3 et C.4 ont été jugés meilleurs que ceux de la série C.5, les fromages de la série C.3 étant supérieurs à ceux de la série C.4.

## Revendications

1. Composition d'enduit comprenant de 5 à 50% en poids de paraffine et de 50 à 95% en poids d'une cire dont la perméabilité intrinsèque à la vapeur d'eau est supérieure à celle de la paraffine.

2. Composition selon l'une des revendications 1 ou 2, caractérisée en ce que la perméabilité intrinsèque à la vapeur d'eau de ladite cire est supérieure d'au moins un facteur 10, de préférence d'un facteur d'environ 30, à celle de la paraffine.

3. Composition selon l'une des revendications 1 ou 2, caractérisée en ce que la cire dont la perméabilité intrinsèque à la vapeur d'eau est supérieure à celle de la paraffine est choisie parmi les esters de polyols comprenant de 3 à 5 fonctions hydroxyle avec des acides gras saturés ou insaturés et portant jusqu'à 3 fonctions hydroxyle.

4. Composition selon la revendication 3, caractérisée en ce que la cire dont la perméabilité intrinsèque à la vapeur d'eau est supérieure à celle de la paraffine est l'huile de ricin hydrogénée.

5. Composition selon l'une quelconque des revendications 1 à 4 caractérisée en ce qu'elle contient en outre des particules hydrosorbantes.

6. Composition selon la revendication 5, caractérisée en ce qu'elle contient jusqu'à 30% en poids par rapport au mélange de cires de particules hydrosorbantes.

7. Composition selon l'une des revendications 5 ou 6, caractérisée en ce que les particules hydrosorbantes sont des filaments de cellulose d'un diamètre d'environ 15 µm et d'une longueur inférieure à 50 µm, de préférence d'environ 20 µm.

8. Pellicule cellulosique revêtue d'une composition selon l'une des revendications 1 à 7.

9. Feuille d'emballage pour produits à taux d'humidité élevé comprenant un substrat approprié revêtu d'une composition selon l'une quelconque des revendications 1 à 7.

10. Feuille d'emballage selon la revendication 9, caractérisée en ce que le substrat possède une PVE mesurée en conditions tropicales comprise entre 250 et 450 g/m².jour, une capacité d'absorption d'eau comprise entre 4 et 11 g/m² (test Cobb modifié: 60 minutes) et une perméabilité à l'oxygène (à 23°C et sous une humidité relative de 75%) inférieure à 100 ml/m².jour.atm.

11. Feuille d'emballage selon l'une des revendications 9 ou 10, caractérisée en ce que le substrat est une pellicule cellulosique.

12. Procédé pour la réalisation d'une feuille d'emballage pour produits à taux d'humidité élevé comprenant les étapes de déroulement d'un film substrat transparent, d'impression d'un motif sur la face de ce film destinée à se trouver à l'intérieur de l'emballage, éventuellement d'enduction, sur ce motif, d'un aplat, et d'une surenduction, sur cette même face, d'une composition d'enduit selon l'une quelconque des revendications 1 à 7.

13. Procédé pour la réalisation d'une feuille d'emballage pour produit à taux d'humidité élevé comprenant les étapes de déroulement d'un film substrat, d'impression d'un motif sur la face de ce film destinée à se trouver à l'extérieur de l'emballage, éventuellement d'enduction sur ce motif, d'une couche de vernis destinée à en améliorer la brillance, et de dépôt sur la face destinée à se trouver à l'intérieur de l'emballage, d'une composition d'enduit selon l'une quelconque des revendications 1 à 7.

14. Procédé selon l'une des revendications 12 ou 13, caractérisé en ce que ladite composition d'enduit est appliquée à raison de 4 à 8 g/m².

15. Procédé d'affinage de fromages à pâte molle à croûte fleurie ou à pâte molle à croûte lavée consistant à laisser reposer ledit fromage dans une feuille d'emballage selon l'une quelconque des revendications 8 à 10 à une température comprise entre 4 et 10°C, dans des conditions d'humidité relative de 50 à 75%, de préférence de 60%.

16. Feuille d'emballage constituée d'un substrat revêtu d'un enduit caractérisée en ce que le substrat possède intrinsèquement une PVE mesurée en conditions tropicales comprise entre 250 et 450 g/m².jour, une capacité d'absorption d'eau comprise entre 4 et 11 g/m² (test Cobb modifié: 60 minutes) et une perméabilité à l'oxygène (à 23°C et sous une humidité relative de 75%) inférieure à 100 ml/m².jour.atm. et en ce qu'après enduction, elle possède une PVE mesurée en conditions tropicales non supérieure à 110 g/m².jour, une capacité d'absorption d'eau inférieure à 4 g/m² (test Cobb modifié: 60 minutes) et une perméabilité à l'oxygène (à 23°C et sous une humidité relative de 50%) inférieure à 20 ml/m².jour.atm.
